# EUROPEAN PATENT SPECIFICATION

(11) **EP 3 690 538 B1**
(45) Date of publication and mention of the grant of the patent: **09.04.2025**
(21) Application number: 18862518.0
(22) Date of filing: 22.08.2018
(51) Int. Cl.: G02F 1/1343

(54) **DISPLAY PANEL, DISPLAY DEVICE, AND DRIVING METHOD THEREOF**
ANZEIGETAFEL, ANZEIGEVORRICHTUNG UND ANSTEUERUNGSVERFAHREN DAFÜR
PANNEAU D'AFFICHAGE, DISPOSITIF D'AFFICHAGE ET SON PROCÉDÉ D'ENTRAÎNEMENT

(30) Priority: 28.09.2017 CN 201710900778
(43) Date of publication of application: 05.08.2020
(73) Proprietor: BOE Technology Group Co., Ltd., Beijing 100015 (CN); Chongqing Boe Optoelectronics Technology Co., Ltd., Chongqing 400714 (CN)
(72) Inventor: ZHAO, Yanli, Beijing 100176 (CN); LI, Xiaoji, Beijing 100176 (CN); ZHU, Changgong, Beijing 100176 (CN); WEN, Jianghong, Beijing 100176 (CN); LIU, Xiaolong, Beijing 100176 (CN); YOU, Wenhao, Beijing 100176 (CN); TANG, Xiuzhu, Beijing 100176 (CN)
(74) Representative: AWA Sweden AB
(86) International application number: PCT/CN2018/101716
(87) International publication number: WO 2019/062395

(56) References cited:
- CN-A- 1 688 920
- CN-A- 1 797 085
- JP-A- 2002 365 657
- US-A1- 2005 024 548
- US-A1- 2016 282 646
- US-A1- 2016 341 987

## Description

### TECHNICAL FIELD

The present disclosure belongs to the field of display technology, and in particular to a display panel and a display apparatus.

### BACKGROUND

A Thin Film Transistor Liquid Crystal Display (TFT-LCD) is an important type of flat panel display device. According to the direction of the electric field driving the liquid crystal, the TFT-LCD can be classified into a vertical electric field type and a horizontal electric field type. The vertical electric field type needs to form a pixel electrode on an array substrate and a common electrode on a color filter (CF) substrate, such as in the commonly used TN mode. The horizontal electric field type needs to simultaneously form a pixel electrode and a common electrode on an array substrate, such as in the ADS mode (Advanced Super Dimension Switch mode). ADS refers to the advanced super-dimension switch technology, which is a planar electric field wide viewing angle core technology. Its essential technical characteristics are described as: the electric field generated by edges of slit electrodes in the same plane and the electric field generated between a slit electrode layer and a plate electrode layer form a multi-dimensional electric field, so that the oriented liquid crystal molecules between the slit electrodes in a liquid crystal cell and the oriented liquid crystal molecules directly above the electrodes can be deflected, thereby improving the liquid crystal operation efficiency and increasing the light transmission efficiency. The advanced super-dimensional switch technology can improve the picture quality of TFT-LCD products, with advantages such as high resolution, high transmittance, low power consumption, wide viewing angle, high aperture ratio, low chromatic aberration, push-Mura free, etc.

US2005/024548A1 discloses novel structural configurations of a TFT-LCD (Thin Film Transistor Liquid Crystal Display) which results in both fast response to input data and provides wide-viewing-angles. The structure of the device is comprised of one pixel electrode layer and two common electrode layers. The structure of the invention can be used with liquid crystal display television (LCD-TV) monitors that require both fast-response as well as wide-viewing-angle. In addition, other liquid crystal technologies which require high speed response would benefit from the TFT-LCD of the present invention.

US2016/282646A1 discloses a display panel and a method for fabricating the same which can prevent light leakage of the display panel. The display panel comprises a central area and a peripheral area surrounding the central area, wherein the central area is applied with horizontal electric field or multi-dimensional electric field, the peripheral area is applied with vertical electric field.

US 2016/341987A1 discloses an LCD panel including a first substrate, a second substrate, and a liquid crystal layer. The first substrate is provided with a first electrode thereon. The first electrode is provided with a plurality of stripe-like control electrodes for controlling a viewing angle of the LCD panel. The second substrate is provided with a second electrode and a third electrode thereon. The second electrode is a common electrode for inputting a common voltage to the LCD panel. The third electrode is a pixel electrode formed in each pixel of the LCD panel. When no bias voltage is applied to the stripe-like control electrodes of the first electrode, the LCD panel is displayed with a wide viewing angle; and when a bias voltage is applied to the stripe-like control electrodes of the first electrode, the LCD panel is displayed with a narrow viewing angle.

### SUMMARY

The invention is set out by the appended set of claims.

According to a first aspect of the present disclosure, a display panel as defined in claim 1 is provided.

According to a second aspect of the present disclosure, there is provided a display apparatus comprising the above display panel as defined in claim 10.

According to a third aspect of the present disclosure, a driving method for the above display panel is provided as defined in claim 11.

Various embodiments of the present invention are defined in the dependent claims.

### BRIEF DESCRIPTION OF THE DRAWINGS

Figure 1 is a schematic diagram of a pixel region in a display panel according to an embodiment of the present disclosure;
Figure 2 is a cross-sectional view taken along line A-A' of Figure 1;
Figure 3 is a schematic diagram of a display panel in a normal display state according to an embodiment of the present disclosure;
Figure 4 is a schematic diagram of a display panel in a black display state according to an embodiment of the present disclosure; and
Figure 5 is a flow chart of a driving method according to an embodiment of the present disclosure.

### DETAILED DESCRIPTION

The present disclosure will be further described in detail below with reference to the accompanying drawings and particular embodiments in order that one with ordinary skills in the art can have a better understanding of the solution of the present disclosure.

ADS liquid crystal displays are widely used due to their wide viewing angles. However, the ADS liquid crystal displays are very sensitive to the disordered arrangement of liquid crystals when in a Normal Black state. Moreover, as time goes on, displays are required to be thin, cheap, high quality, etc., so strict test requirements and the weak system design are increasingly impacting the displays. When a liquid crystal display is subjected to an extrusion deformation, a spacer (for example, a Photo Spacer (PS)) in the black matrix (BM) region may scratch the Polyimide (PI) Layer (orientation layer) at the edge of the pixel region on the CF substrate side. When the display is in the black state, no voltage is applied to the common electrode and the pixel electrode (no electric field). At this time, at the edge of the pixel region, the liquid crystal arrangement will be disordered due to the scratched PI, and bad display effects such as blue spots and colorful spots will occur at this position.

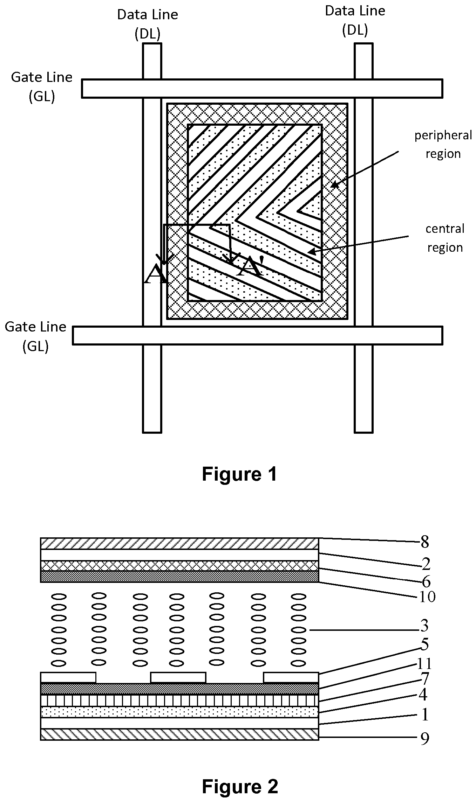

As shown in both Figures 1 and 2, an embodiment of the present disclosure provides a display panel including a first substrate 1 and a second substrate 2 disposed opposite to each other, and a liquid crystal layer 3 disposed between the first substrate 1 and the second substrate 2. Gate lines, GLs, and data lines, DLs, intersect to define pixel regions.

The first substrate 1 is divided into a plurality of pixel regions, and the pixel region includes a central region and a peripheral region. A first electrode 4 and a second electrode 5 are sequentially disposed on a surface of the first substrate 1 facing the liquid crystal layer 3 in a direction from the first substrate 1 to the liquid crystal layer 3. The first electrode 4 and the second electrode 5 are configured to form an electric field under a voltage to drive liquid crystal molecules in the liquid crystal layer 3 to deflect. An auxiliary electrode 6 is disposed on the second substrate 2, and the orthographic projection of the auxiliary electrode 6 on the first substrate 1 corresponds to the peripheral region.

The display panel of the present embodiment is provided with the auxiliary electrode 6 on the second substrate 2, and the orthographic projection of the auxiliary electrode 6 on the first substrate 1 corresponds to the peripheral region.

Therefore, when the display panel is in a normal gray scale display state, a first voltage is applied to the first electrode 4, and a second voltage is applied to the second electrode 5, where the difference between the first voltage and the second voltage is the display voltage. A voltage same as the voltage applied to first electrode 4 is applied to the auxiliary electrode 6, in order to prevent an electric field from being formed between the first electrode 4 and the auxiliary electrode 6 to affect the electric field formed between the first electrode 4 and the second electrode 5, which otherwise would affect the normal display of the display panel. When the display panel is in a black display (L0 display) state, the voltages applied to the first electrode 4 and the second electrode 5 on the first substrate 1 are the same, that is, the relative voltage between the first electrode 4 and the second electrode 5 is 0 V. At this time, a driving voltage, which is different from those applied to the first electrode 4 and the second electrode 5, is applied to the auxiliary electrode 6, thereby a vertical electric field is formed between the auxiliary electrode 6 and the first electrode 4, and the liquid crystal molecules at the position where the auxiliary electrode 6 is located are vertically arranged. If the light absorption axes of the upper polarizer 8 and the lower polarizer 9 of the display panel are perpendicular to each other, the display panel can also realize a black display state at the position where the auxiliary electrode 6 is located, thereby effectively solving the problem of blue spots in the surrounding regions of the pixel regions of the display panel due to scratches of the PI layer during the extrusion test.

Particularly, in the display panel of the present invention, the auxiliary electrode 6 is configured to be applied with the same voltage as the first electrode 4 when the display panel is in a gray scale display state; and the auxiliary electrode 6 is configured to be applied with a voltage different from the first electrode 4 when the display panel is in a black display state.

In this embodiment, the first substrate 1 may be an array substrate, and the corresponding second substrate 2 is a color film substrate. Gate line, GLs, and data lines, DLs on the first substrate 1 (shown in Figure. 1) intersect to define pixel regions, and the color filter substrate 2 is provided with a color filter and a black matrix. Generally, the color filter is arranged to correspond to a pixel region, and in the claimed invention, the orthographic projection of the black matrix on the first substrate is between adjacent pixel regions, so as to prevent light leakage at the positions of the gate lines and the data lines on the array substrate, which may result in a poor display. A spacer is located in the area where the black matrix is located to avoid occupying the position of the display area and affecting the aperture ratio of the display panel. In the claimed invention, the auxiliary electrode 6 is disposed on a side of the black matrix near the central region; and the spacing between the auxiliary electrode 6 and the black matrix is between 0 and 60 µm. The purpose of such an arrangement is to ensure that the liquid crystal molecules in the surrounding region of the pixel regions can be vertically arranged as much as possible in the black display state to alleviate the problem of blue spots.

In the embodiment, the first electrode 4 on the first substrate 1 is a plate electrode, and the second electrode 5 is a strip electrode. Thereby, a liquid crystal coplanar switching electric field can be formed when voltages are applied to the first electrode 4 and the second electrode 5, to drive the liquid crystal molecules to deflect so as to realize the display. Of course, according to an embodiment of the present disclosure, an insulating layer 7 is further disposed between the first electrode 4 and the second electrode 5. The insulating layer 7 has a thickness of 0.1 to 1 µm, and its material includes a mixture of Barium Titanate and Polyimide. The content of the Barium Titanate in the mixture is 50%, and the dielectric constant of the mixture is 30. The Material with a high dielectric constant (e.g., a dielectric constant greater than 3.7) can improve the electric field utilization and reduce the driving voltage, thereby reducing the power consumption.

It should be noted here that both the first electrode 4 and the second electrode 5 may be strip electrodes. When strip electrodes are used, the first electrode 4 and the second electrode 5 can be arranged in the same layer or in different layers. When they are arranged in the same layer, the strip electrodes thereof can be alternately arranged.

In this embodiment, the auxiliary electrode 6 (its orthographic projection on the first substrate) corresponds to the peripheral regions of the pixel regions of the display panel.

In the present embodiment, the materials of the first electrode 4, the second electrode 5, and the auxiliary electrode 6 are all transparent conductive materials, such as ITO (Indium Tin Oxide). Of course, it is not limited to such kind of material.

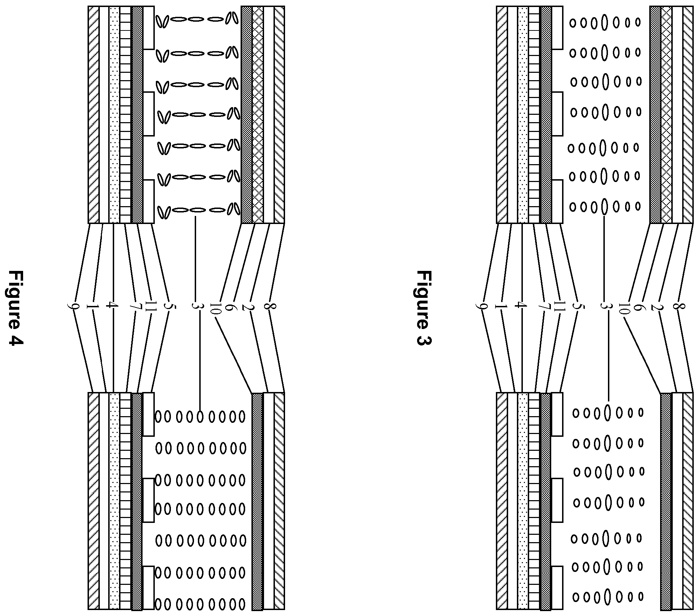

The display panel structure of the present embodiment may be used in an ADS display mode, and an auxiliary electrode 6 is provided on the second substrate 2 in order to alleviate the problem of blue spots in the surrounding regions of the pixel regions of the display panel occurred in the black display state. Figure 3 is a schematic diagram of a display panel in a normal display state according to an embodiment of the present disclosure. Figure 3 shows a schematic diagram of liquid crystals at the peripheral region (left side in Figure 3) and at the central region (right side in Figure 3) of the pixel regions in a normal display state (displaying a non-black display screen). For the peripheral region of the pixel regions, a relative voltage of 0 V is applied between the auxiliary electrode 6 on the second substrate 2 and the first electrode 4 on the first substrate 1, and a Von voltage is applied to the second electrode 5 on the first substrate 1. Since the distance between the second electrode 5 and the first electrode 4 is much smaller than the distance between the second electrode 5 and the auxiliary electrode 6, the horizontal electric field formed by the second electrode 5 and the first electrode 4 is much larger than the vertical electric field formed by the second electrode 5 and the auxiliary electrode 6. Further, when the second electrode 5 is a strip electrode as shown in Figure 3, the formed vertical electric field exists only in a region corresponding to the strip electrode, and has little influence on the display panel. Thus, when the display panel displays a non-black display screen, a liquid crystal coplanar switching electric field is formed between the first electrode 4 and the second electrode 5, which drives the liquid crystal molecules to deflect so as to realize the display. The liquid crystals driven at the peripheral region of the pixel regions and the liquid crystals driven at the central region are the same, which are both in a normal ADS display mode when the display panel is in a normal gray scale display state.

Figure 4 is a schematic diagram of a display panel in a black display state according to an embodiment of the present disclosure. Figure 4 shows a schematic diagram of liquid crystals at the peripheral region (left side in Figure 4) and at the central region (right side in Figure 4) of the pixel regions in a black display state. When the display panel displays a black display screen, a driving voltage Vx is applied to the auxiliary electrode 6 on the second substrate 2 corresponding to the peripheral region of the pixel regions, and a relative voltage of 0 V is applied between the first electrode 4 and the second electrode 5 on the first substrate 1. Therefore, when the display panel displays a black display screen, the auxiliary electrode 6 and the first electrode 4 act to apply a longitudinal vertical electric field to the liquid crystals in the peripheral region of the pixel regions, and the liquid crystal molecules are vertically arranged in accordance with the electric field (as shown on the left side of Figure 4). When the light absorption axes of the upper polarizer 8 and the lower polarizer 9 are perpendicular to each other, the display panel also displays a black display screen at the peripheral region. The central region of the pixel regions is in a normal ADS display mode design. When the display panel displays a black display screen, a relative voltage of 0 V is applied between the first electrode 4 and the second electrode 5 of the first substrate 1, and the liquid crystal molecules are arranged along the rubbing orientation of PI, so as to display a black screen. It is also shown in Figure 4 that the liquid crystal molecules immediately adjacent to the orientation layers 10 and 11 will have the same orientation as the orientation layers due to the anchoring effect of the orientation layers, while the liquid crystal molecules far away from the orientation layers are subjected to the vertical electric field, and have a vertical orientation.

As shown in Figures 3 and 4, the display panel according to an embodiment of the present disclosure further comprises: a first polarizer 8 and a second polarizer 9 respectively disposed on a side of the first substrate and a side of the second substrate opposite to the liquid crystal layer, wherein the first polarizer 8 and the second polarizer 9 have light absorption axes that are perpendicular to each other.

As further shown in Figures 3 and 4, the display panel according to an embodiment of the present disclosure further comprises: a first orientation layer 10 and a second orientation layer 11 in contact with the liquid crystal layer, wherein the first orientation layer 10 is disposed on a side of the second substrate 2 facing the liquid crystal layer, the second orientation layer 11 is disposed on a side of the first substrate 1 facing the liquid crystal layer. The orientations of the first orientation layer and the second orientation layer are parallel.

Another embodiment of the present disclosure provides a display apparatus including a display panel according to an embodiment of the present disclosure. The display apparatus according to an embodiment of the present disclosure has the same effects as the above-described display panel, and details thereof are not described herein again.

The display apparatus may be any product or component having a display function, such as a mobile phone, a tablet computer, a television set, a monitor, a notebook computer, a digital photo frame, a navigator, or the like.

Of course, the display apparatus of the embodiment may further include other conventional components, such as a power supply unit, a display driving unit, and the like.

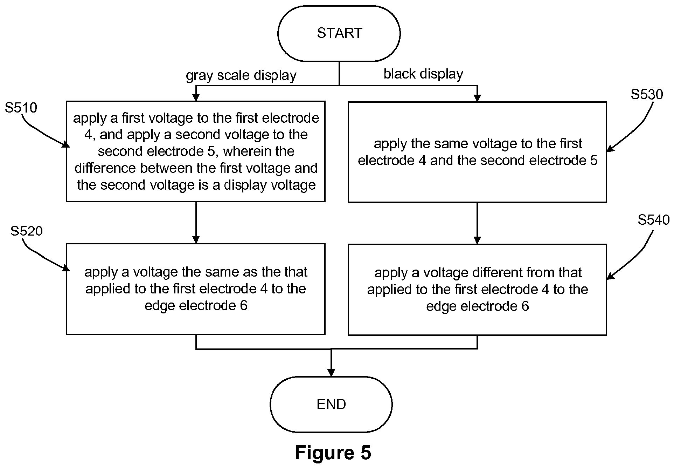

Yet another embodiment of the present disclosure provides a driving method for driving the display panel according to an embodiment of the present disclosure. Figure 5 shows a flow chart of a driving method according to an embodiment of the present disclosure. As shown in Figure 5, at step S510, a first voltage is applied to the first electrode 4 and a second voltage is applied to the second electrode 5 when the display panel is in a gray scale display state, wherein the difference between the first voltage and the second voltage is a display voltage. In order not to affect the normal gray scale display of the display panel, the method further includes the step S520 of applying to the auxiliary electrode 6 a voltage same as the voltage applied to the first electrode 4, that is, the first voltage. As described above, the display panel of the present embodiment is provided with an auxiliary electrode 6 on the second substrate 2, and the orthographic projection of the auxiliary electrode 6 on the first substrate 1 at least partially overlaps the peripheral region. Therefore, applying to the auxiliary electrode 6 a voltage same as the voltage applied to the first electrode 4 can prevent an electric field from being formed between the first electrode 4 and the auxiliary electrode 6, which otherwise would destroy the electric field formed between the first electrode 4 and the second electrode 5 and affect the normal display of the display panel.

As shown in Figure 5, the driving method according to an embodiment of the present disclosure further includes a step S530 of applying the same voltage to the first electrode and the second electrode when the display panel is in a black display state, that is, a relative voltage of 0V is applied between the first electrode 4 and the second electrode 5, so that the display panel displays a black display screen. In this case, the method further includes a step S540 of applying to the auxiliary electrode 6 a voltage different from that applied to the first electrode 4, such as a driving voltage Vx. Thus, a longitudinal vertical electric field is applied to the liquid crystals in the peripheral region of the pixel regions, and the liquid crystal molecules are vertically arranged in accordance with the electric field. When the light absorption axes of the upper polarizer 8 and the lower polarizer 9 are perpendicular to each other, the display panel also displays a black display screen at the peripheral region.

It is to be understood that the above implementations are merely illustrative embodiments for the purpose of illustrating the principles of the present disclosure, but the present disclosure is not limited thereto. It will be apparent to those skilled in the art that various changes and modifications can be made therein without departing from the scope of the present invention as defined in the appended claims.

## Claims

1. A display panel, comprising:
a first substrate (1) and a second substrate (2) disposed opposite to each other, and a liquid crystal layer (3) disposed between the first substrate (1) and the second substrate (2), wherein the first substrate (1) is divided into a plurality of pixel regions, and the pixel regions comprise a central region and a peripheral region surrounding the central region,
a first electrode (4) and a second electrode (5) are sequentially disposed on a surface of the first substrate facing the liquid crystal layer in a direction from the first substrate to the liquid crystal layer, the first electrode (4) and the second electrode (5) are configured to form an electric field under a voltage to drive liquid crystal molecules in the liquid crystal layer (3) to deflect;
an auxiliary electrode (6) disposed on the second substrate (2), wherein an orthographic projection of the auxiliary electrode (6) on the first substrate (1) corresponds to the peripheral region; and
a black matrix disposed on the second substrate (2), wherein an orthographic projection of the black matrix on the first substrate (1) is between adjacent pixel regions, and the auxiliary electrode (6) is arranged on a side of the black matrix near the central region, and a spacing between the auxiliary electrode (6) and the black matrix is between 0 and 60 µm, wherein the display panel is configured such that the same voltage is applied to the auxiliary electrode (6) and the first electrode (4) when the display panel is in a gray scale display state, and
such that different voltages are applied to the auxiliary electrode (6) and the first electrode (4) when the display panel is in a black display state.

2. The display panel of claim 1, wherein the first electrode is a plate electrode, and
the second electrode is a strip
electrode.

3. The display panel of claim 1, wherein an insulating layer (7) is further disposed between the first electrode and the second electrode.

4. The display panel of claim 3, wherein the insulating layer has a thickness of between 0.1 and 1 µm; and
the insulating layer (7) is a dielectric having a dielectric constant greater than 3.7.

5. The display panel of claim 3, wherein the insulating layer (7) is made of a material comprising a mixture of Barium Titanate and Polyimide.

6. The display panel of claim 1, further comprises: a first polarizer (8) and a second polarizer (9) respectively disposed on a side of the first substrate and a side of the second substrate opposite to the liquid crystal layer, wherein the first polarizer (8) and the second polarizer (9) have light absorption axes that are perpendicular to each other.

7. The display panel of claim 1, further comprises: a first orientation layer (10) and a second orientation layer (11) in contact with the liquid crystal layer, wherein the first orientation layer (10) is disposed on a side of the second substrate (2) facing the liquid crystal layer, the second orientation layer (11) is disposed on a side of the first substrate (1) facing the liquid crystal layer, and wherein the first orientation layer and the second orientation layer have parallel orientations.

8. The display panel of claim 1, wherein the auxiliary electrode is made of a material comprising ITO.

9. The display panel of claim 1, wherein the first substrate is an array substrate, and the second substrate is a color filter substrate.

10. A display apparatus comprising the display panel of any of claims 1-9.

11. A driving method for driving the display panel of any of claims 1-9, the driving method comprises, when the display panel is in a gray scale display state:
applying a first voltage to the first electrode and applying a second voltage to the second electrode (S510), wherein the difference between the first voltage and the second voltage is a display voltage; and
applying the first voltage to the auxiliary electrode (S520).

12. The driving method of claim 11, further comprising, when the display panel is in a black display state:
applying the same voltage to the first electrode and the second electrode (S530); and
applying, to the auxiliary electrode, a voltage different from the voltage applied to the first electrode (S540).

## Patentansprüche

1. Anzeigetafel, aufweisend:
ein erstes Substrat (1) und ein zweites Substrat (2), die einander gegenüberliegend angeordnet sind, und eine Flüssigkristallschicht (3), die zwischen dem ersten Substrat (1) und dem zweiten Substrat (2) angeordnet ist, wobei das erste Substrat (1) in mehrere Pixelbereiche unterteilt ist und die Pixelbereiche einen zentralen Bereich und einen Randbereich, der den zentralen Bereich umgibt, aufweisen,
eine erste Elektrode (4) und eine zweite Elektrode (5), die nacheinander auf einer Fläche des ersten Substrats, die der Flüssigkristallschicht in einer Richtung von dem ersten Substrat zu der Flüssigkristallschicht zugewandt ist, angeordnet sind, wobei die erste Elektrode (4) und die zweite Elektrode (5) konfiguriert sind, um unter einer Spannung ein elektrisches Feld zu bilden, um Flüssigkristallmoleküle in der Flüssigkristallschicht (3) zu einer Ablenkung zu bewegen;
eine Hilfselektrode (6), die auf dem zweiten Substrat (2) angeordnet ist, wobei eine orthographische Projektion der Hilfselektrode (6) auf das erste Substrat (1) dem Randbereich entspricht; und
eine schwarze Matrix, die auf dem zweiten Substrat (2) angeordnet ist, wobei eine orthographische Projektion der schwarzen Matrix auf das erste Substrat (1) zwischen benachbarten Pixelbereichen liegt und die Hilfselektrode (6) auf einer Seite der schwarzen Matrix in der Nähe des zentralen Bereichs angeordnet ist und ein Abstand zwischen der Hilfselektrode (6) und der schwarzen Matrix zwischen 0 und 60 µm beträgt, wobei die Anzeigetafel so konfiguriert ist, dass an die Hilfselektrode (6) und die erste Elektrode (4) dieselbe Spannung angelegt ist, wenn sich die Anzeigetafel in einem Graustufen-Anzeigezustand befindet, und dass an die Hilfselektrode (6) und die erste Elektrode (4) unterschiedliche Spannungen angelegt sind, wenn sich die Anzeigetafel in einem Schwarz-Anzeigezustand befindet.

2. Anzeigetafel nach Anspruch 1, wobei die erste Elektrode eine Plattenelektrode ist und die zweite Elektrode eine Streifenelektrode ist.

3. Anzeigetafel nach Anspruch 1, wobei zwischen der ersten Elektrode und der zweiten Elektrode ferner eine Isolierschicht (7) angeordnet ist.

4. Anzeigetafel nach Anspruch 3, wobei die Isolierschicht eine Dicke zwischen 0,1 und 1 µm aufweist; und
die Isolierschicht (7) ein Dielektrikum mit einer Dielektrizitätskonstante von mehr als 3,7 ist.

5. Anzeigetafel nach Anspruch 3, wobei die Isolierschicht (7) aus einem Material hergestellt ist, das eine Mischung aus Bariumtitanat und Polyimid aufweist.

6. Anzeigetafel nach Anspruch 1, ferner aufweisend: einen ersten Polarisator (8) und einen zweiten Polarisator (9), die jeweils auf einer Seite des ersten Substrats und einer Seite des zweiten Substrats gegenüber der Flüssigkristallschicht angeordnet sind, wobei der erste Polarisator (8) und der zweite Polarisator (9) Lichtabsorptionsachsen aufweisen, die zueinander senkrecht sind.

7. Anzeigetafel nach Anspruch 1, ferner aufweisend: eine erste Orientierungsschicht (10) und eine zweite Orientierungsschicht (11) in Kontakt mit der Flüssigkristallschicht, wobei die erste Orientierungsschicht (10) auf einer Seite des zweiten Substrats (2), die der Flüssigkristallschicht zugewandt ist, angeordnet ist, die zweite Orientierungsschicht (11) auf einer Seite des ersten Substrats (1), die der Flüssigkristallschicht zugewandt ist, angeordnet ist, und wobei die erste Orientierungsschicht und die zweite Orientierungsschicht parallele Orientierungen aufweisen.

8. Anzeigetafel nach Anspruch 1, wobei die Hilfselektrode aus einem Material hergestellt ist, das ITO aufweist.

9. Anzeigetafel nach Anspruch 1, wobei das erste Substrat ein Arraysubstrat ist und das zweite Substrat ein Farbfiltersubstrat ist.

10. Anzeigevorrichtung, die Anzeigetafel nach einem der Ansprüche 1 bis 9 aufweisend.

11. Ansteuerverfahren zum Ansteuern der Anzeigetafel nach einem der Ansprüche 1 bis 9, wobei das Ansteuerverfahren, wenn sich die Anzeigetafel in einem Graustufen-Anzeigezustand befindet, Folgendes umfasst:
Anlegen einer ersten Spannung an die erste Elektrode und Anlegen einer zweiten Spannung an die zweite Elektrode (S510), wobei die Differenz zwischen der ersten Spannung und der zweiten Spannung eine Anzeigespannung ist; und
Anlegen der ersten Spannung an die Hilfselektrode (S520).

12. Ansteuerverfahren nach Anspruch 11, ferner umfassend, wenn sich die Anzeigetafel in einem Schwarz-Anzeigezustand befindet:
Anlegen derselben Spannung an die erste Elektrode und die zweite Elektrode (S530); und
Anlegen einer Spannung, die sich von der an die erste Elektrode angelegten Spannung unterscheidet, an die Hilfselektrode (S540).

## Revendications

1. Panneau d'affichage, comprenant :
un premier substrat (1) et un second substrat (2) disposés en face l'un de l'autre, et
une couche de cristaux liquides (3) disposée entre le premier substrat (1) et le second substrat (2), le premier substrat (1) étant divisé en une pluralité de zones de pixels, et les zones de pixels comprenant une zone centrale et une zone périphérique entourant la zone centrale,
une première électrode (4) et une seconde électrode (5) étant disposées séquentiellement sur une surface du premier substrat faisant face à la couche de cristaux liquides dans une direction allant du premier substrat à la couche de cristaux liquides, la première électrode (4) et la seconde électrode (5) étant configurées pour former un champ électrique sous une tension pour entraîner les molécules de cristaux liquides dans la couche de cristaux liquides (3) pour les dévier ;
une électrode auxiliaire (6) disposée sur le second substrat (2), une projection orthographique de l'électrode auxiliaire (6) sur le premier substrat (1) correspondant à la zone périphérique ; et
une matrice noire disposée sur le second substrat (2), une projection orthographique de la matrice noire sur le premier substrat (1) se trouvant entre des zones de pixels adjacentes, et l'électrode auxiliaire (6) étant disposée sur un côté de la matrice noire près de la zone centrale, et un espacement entre l'électrode auxiliaire (6) et la matrice noire étant compris entre 0 et 60 µm, le panneau d'affichage étant configuré de telle sorte que la même tension soit appliquée à l'électrode auxiliaire (6) et à la première électrode (4) lorsque le panneau d'affichage est dans un état d'affichage en échelle de gris, et de telle sorte que différentes tensions soient appliquées à l'électrode auxiliaire (6) et la première électrode (4) lorsque le panneau d'affichage est dans un état d'affichage noir.

2. Panneau d'affichage selon la revendication 1, dans lequel la première électrode est une électrode en plaque, et la seconde électrode est une électrode en bande.

3. Panneau d'affichage selon la revendication 1, dans lequel une couche isolante (7) est en outre disposée entre la première électrode et la seconde électrode.

4. Panneau d'affichage selon la revendication 3, dans lequel la couche isolante a une épaisseur comprise entre 0,1 et 1 µm ; et
la couche isolante (7) est un diélectrique ayant une constante diélectrique supérieure à 3,7.

5. Panneau d'affichage selon la revendication 3, dans lequel la couche isolante (7) est constituée d'un matériau comprenant un mélange de titanate de baryum et de polyimide.

6. Panneau d'affichage selon la revendication 1, comprenant en outre : un premier polariseur (8) et un second polariseur (9) disposés respectivement sur un côté du premier substrat et un côté du second substrat opposé à la couche de cristaux liquides, dans lequel le premier polariseur (8) et le second polariseur (9) ayant des axes d'absorption de lumière qui sont perpendiculaires l'un à l'autre.

7. Panneau d'affichage selon la revendication 1, comprenant en outre : une première couche d'orientation (10) et une seconde couche d'orientation (11) en contact avec la couche de cristaux liquides, la première couche d'orientation (10) étant disposée sur un côté du second substrat (2) faisant face à la couche de cristaux liquides, la seconde couche d'orientation (11) étant disposée sur un côté du premier substrat (1) faisant face à la couche de cristaux liquides, et la première couche d'orientation et la seconde couche d'orientation ayant des orientations parallèles.

8. Panneau d'affichage selon la revendication 1, dans lequel l'électrode auxiliaire est constituée d'un matériau comprenant de l'ITO.

9. Panneau d'affichage selon la revendication 1, dans lequel le premier substrat est un substrat de réseau, et le second substrat est un substrat de filtre coloré.

10. Appareil d'affichage comprenant le panneau d'affichage selon l'une quelconque des revendications 1 à 9.

11. Procédé de commande pour commander le panneau d'affichage selon l'une quelconque des revendications 1 à 9, le procédé de commande comprenant, lorsque le panneau d'affichage est dans un état d'affichage en échelle de gris :
l'application d'une première tension à la première électrode et
l'application d'une seconde tension à la seconde électrode (S510), la différence entre la première tension et la seconde tension étant une tension d'affichage ; et
l'application de la première tension à l'électrode auxiliaire (S520).

12. Procédé de commande selon la revendication 11, comprenant en outre, lorsque le panneau d'affichage est dans un état d'affichage noir :
l'application de la même tension à la première électrode et à la seconde électrode (S530) ; et l'application, à l'électrode auxiliaire,
d'une tension différente de la tension appliquée à la première électrode (S540).
